# EUROPEAN PATENT APPLICATION

(11) **EP 4 718 505 A1**
(43) Date of publication of application: **01.04.2026**
(21) Application number: 25202213.2
(22) Date of filing: 15.09.2025
(51) Int. Cl.: H01M 4/02, H01M 4/139, H01M 4/13, H01M 4/66, H01M 4/62

(54) **POSITIVE ELECTRODE AND PREPARATION METHOD THEREOF AND BATTERY**

(30) Priority: 29.09.2024 CN 202411379945
(71) Applicant: AESC Japan Ltd., Yokohama-Shi, Kanagawa 220-0012 (JP)
(72) Inventor: ZHANG, Hongchen, Jiangyin City, Wuxi City, 214443 (CN); TONG, Lintai, Jiangyin City, Wuxi City, 214443 (CN)
(74) Representative: Becker, Eberhard

(57) **Abstract**

Disclosed are a positive electrode and a preparation method thereof and a battery. The positive electrode includes a current collector, an active material layer, and a conductive layer disposed between the current collector and the active material layer. The conductive layer includes an MXene material. Adding the MXene material in the conductive layer may elevate the conductive performance and stability of the battery, and may also strengthen the adhesion between the current collector and the active material layer, enhance the peel force of the positive electrode, and improve the long-term cycle stability of the battery. In addition, since the addition of the MXene material enhances the adhesion between the current collector and the active material layer, under the condition that the peel strength of the electrode sheet is ensured, the content of binder in the active material layer may be reduced.

## Description

### BACKGROUND

### Technical Field

The present disclosure relates to the field of battery technology, and particularly relates to a positive electrode and a preparation method thereof and a battery.

### Description of Related Art

Lithium-ion batteries mainly include positive electrodes, negative electrodes, an electrolyte and a separator. The positive electrodes and the negative electrodes may also be further classified into raw materials such as current collectors, active substances and auxiliary materials. As an important component of electrode sheets, current collectors affect the processing performance, electrical performance and safety performance of batteries, and play a very important role in the industrial production and application of batteries.

The current collector of the positive electrode is mainly made of an aluminum foil, and the current collector of the negative electrode is mostly made of a copper foil. In order to further enhance the conductive capacity of the positive electrode current collector and obtain a better electrode performance, coating methods are typically applied to the aluminum current collectors to enhance their conductivity. By coating carbon on the aluminum current collector to enhance the conductive performance of the aluminum foil, it is also possible to elevate an adhesion between the current collector and an active substance layer, thus improving the processing performance of the current collector foil. However, existing carbon coating formulations only enhance the conductive performance of the aluminum current collectors, and cannot elevate the adhesion between the current collector and the active material layer.

### SUMMARY

In view of this, a purpose of the present disclosure lies in providing a positive electrode and a preparation method thereof and a battery.

Based on the above purpose, a first aspect of the present disclosure provides a positive electrode, which includes a current collector, an active material layer and a conductive layer disposed between the current collector and the active material layer. The conductive layer includes an MXene material.

Optionally, a ratio of a thickness of the conductive layer to a thickness of the active material layer is 1:(40~120).

Optionally, the conductive layer further includes a conductive agent and a binder. A mass ratio of the MXene material, the conductive agent and the binder is (0.5~3):(32~37):(58~66).

Optionally, the MXene material includes a transition metal carbide and/or a transition metal nitride.

The transition metal carbide includes: one or more of Ti₃C₂Tₓ, Ti₂CTₓ, Nb₂CTₓ, Nb₄C₃Tₓ, Ta₄C₃Tₓ, V₄C₃Tₓ, V₂CTₓ, Mo₂CTₓ, TiVCTₓ, TiNbCTₓ, TiTaCTₓ, VNbCTₓ, Ti₂VC₂Tₓ, Ti₂TaC₂Tₓ, Mo₂TiC₂Tₓ, Ti₃CNTₓ, and Mo₂Ti₂C₃Tₓ.

The transition metal nitride includes: one or more of Ti₂NTₓ, V₂NTₓ, W₂NTₓ, and Ti₄N₃Tₓ.

Optionally, the active material layer includes an active material, the conductive agent and the binder. A mass ratio of the active material, the conductive agent and the binder is (97~99):(0.5~1):(0.4~2).

Optionally, the conductive agent is at least one of conductive carbon black, conductive graphite, a carbon nanotube, a nano carbon fiber and graphene.

Optionally, the binder is at least one of polyacrylic acid, polyvinylidene fluoride, polyvinyl alcohol, a styrene butadiene copolymer and sodium carboxymethyl cellulose.

A second aspect of the present disclosure provides a method for preparing a positive electrode, including:

Preparing a conductive layer slurry, wherein the conductive layer slurry includes an MXene material;

Coating the conductive layer slurry on a current collector to obtain an intermediate electrode sheet, wherein the intermediate electrode sheet includes the current collector and a conductive layer coated on the current collector;

Preparing an active material layer slurry, coating the active material layer slurry on the conductive layer to obtain the positive electrode.

Optionally, the conductive layer slurry includes the MXene material, a conductive agent, a binder, a dispersant and a solvent, wherein a mass ratio of the MXene material, the conductive agent, the binder and the dispersant is 0.5~3:32~37:58~66:0.2~1.

The active material layer slurry includes an active material, the conductive agent, the binder, the dispersant and the solvent, wherein a mass ratio of the active material, the conductive agent, the binder and the dispersant is 97~99:0.5~1:0.4~2:0.05~0.1.

A third aspect of the present disclosure provides a battery, which includes the positive electrode described in any one of embodiments in the first aspect or the positive electrode prepared by the preparation method described in any one of the embodiments in the second aspect, as well as a separator and a negative electrode.

Based on the above description, it may be seen that, in the positive electrode and the preparation method thereof and the battery provided by the present disclosure, the positive electrode includes the current collector, the active material layer and the conductive layer disposed between the current collector and the active material layer. The conductive layer includes the MXene material. By adding the MXene material in the conductive layer, it is possible to elevate the conductive performance and stability of the battery, and also strengthen the adhesion between the current collector and the active material layer, enhance the peel force of the positive electrode, and improve the long-term cycle stability of the battery.

### DESCRIPTION OF THE EMBODIMENTS

To make the purpose, technical solutions and advantages of the present disclosure more comprehensible, the present disclosure is further described in detail below in combination with specific examples.

It should be noted that, unless otherwise defined, the technical terms used in the following examples have the same meanings as commonly understood by those skilled in the art to which the present disclosure belongs. The test reagents used in the following examples are conventional biochemical reagents unless otherwise specified; the experimental methods are conventional methods unless otherwise specified.

A lithium-ion battery is a type of chemical battery that relies on lithium ions shuttling between positive and negative electrodes to achieve discharge purposes. Because the advantages of the lithium-ion battery include a high energy density, a high operation voltage, a long cycle life, and a large charge-discharge rate, the lithium-ion battery is widely applied in new energy vehicles and energy storage battery fields.

The lithium-ion battery mainly includes a positive electrode, a negative electrode, an electrolyte and a separator. The positive electrode and the negative electrode may also be further classified into raw materials such as current collectors, active material layers and auxiliary materials. As an important component of electrode sheets, current collectors affect the processing performance, electrical performance and safety performance of batteries, and play a very important role in the industrial production and application of batteries.

The current collector of the positive electrode is mainly made of an aluminum foil, and the current collector of the negative electrode is mostly made of a copper foil. In order to further enhance the conductive capacity of the positive electrode current collector and obtain a better electrode performance, coating methods are typically applied to the aluminum current collectors to enhance their conductivity. By coating carbon on the aluminum current collector to enhance the conductive performance of the aluminum foil, it is also possible to elevate an adhesion between the current collector and an active material layer, thus improving the processing performance of the current collector foil.

However, existing carbon coating formulations only enhance the conductive performance of the aluminum current collectors, and cannot elevate the adhesion between the current collector and the active material layer.

The inventors found that due to a limited contact area between a rigid positive current collector and a positive active material layer, an adhesion strength between the positive current collector and the positive active material layer is limited, and the bonding force between them is limited. Accordingly, during long-term charge-discharge cycle processes, due to continuous changes in electrode volume, material particles become loose, making the bonding force between the positive current collector and the positive active material layer reduced increasingly, causing powder dropping conditions, and making battery capacity and cycle life reduce rapidly.

Therefore, how to strengthen the adhesion between the positive current collector and the positive active material layer while not affecting the conductive performance is an urgent problem that needs to be solved.

In view of the foregoing, a first aspect of the present disclosure provides a positive electrode, which includes a current collector, an active material layer, and a conductive layer disposed between the current collector and the active material layer, wherein the conductive layer includes an MXene material.

Specifically, the MXene material is a new type of two-dimensional material composed of metal carbide or metal nitride. Generally, the MXene material may be represented by a chemical formula Mₙ₊₁XₙTₘ, wherein "M" represents metal elements, mainly including transition metal (such as chromium, molybdenum, manganese, iron, cobalt, copper, aluminum, silver, nickel, palladium, platinum, ruthenium and other elements); "X" represents carbon and nitrogen elements; and "T" represents functional groups on a material surface, such as hydroxyl groups (-OH), halogen groups (-F, -Cl), etc.

The MXene material has an excellent flexibility, a good electronic conductivity, a good electrical conductivity and an excellent mechanical performance.

In the present disclosure, by adding the MXene material to the conductive layer, on one hand, due to the excellent electrical conductive performance of the MXene material, the addition of the MXene material may act as a conductive agent to improve a DC internal resistance of the lithium-ion battery, reduce heat generated by the battery in practical application, and further elevate the electrical conductive performance and stability of the battery.

On the other hand, because the MXene material contains abundant functional groups such as hydroxyl groups and halogen groups as well as transition metals, the functional groups may be combined with various ions (such as fluorine ions, acid radical ions, hydroxyl groups, carboxyl groups, etc.) in the active material layer by means of hydrogen bonding, acting as a connecting bridge, thereby strengthening the adhesion between the current collector and the active material layer, further enhancing the peel force of the positive electrode, and improving the long-term cycle stability of the battery.

Additionally, since the addition of the MXene material enhances the adhesion between the current collector and the active material layer, under the condition of ensuring a specific peel strength of the electrode sheet, the content of the binder in the active material layer may be reduced, and a mass proportion of the active material in the active material layer may be increased. In this way, under the condition of the same coating surface density, the capacity of the battery is enhanced, and the stability of long-term use of the battery is ensured.

Therefore, adding the MXene material to the conductive layer may simultaneously elevate the conductive performance and the peel force of the positive electrode, and may also increase the capacity of the battery.

In some implement, a ratio of a thickness of the conductive layer to a thickness of the active material layer is 1:(40~120).

Specifically, when the ratio of the thickness of the conductive layer to the thickness of the active material layer is 1:(40~120), both the thickness of the conductive layer and the thickness of the active material layer are appropriate, so that the setting of the conductive layer may both strengthen the adhesion between the current collector and the active material layer, and the thickness of the entire positive electrode will not be excessively increased, while the energy density of the battery will not be affected.

When the ratio of the thickness of the conductive layer to the thickness of the active material layer is less than 1:120, the thickness of the conductive layer is too thin. Under the condition where the MXene material is added at a specific proportion, the excessively thin conductive layer causes the addition amount of MXene material to be too small, making it difficult to significantly strengthen the adhesion between the current collector and the active material layer.

When the ratio of the thickness of the conductive layer to the thickness of the active material layer is greater than 1:40, the thickness of the conductive layer is too thick. Although the adhesion between the current collector and the active material layer may be significantly strengthened, the kinetic parameters of the battery will be affected, causing performance degradation, which is unfavorable for the use of the battery.

Further, the ratio of the thickness of the conductive layer to the thickness of the active material layer is preferably 1:(60~100), so that it is possible to significantly strengthen the adhesion between the current collector and the active material layer without excessively increasing the thickness of the entire positive electrode, and the energy density of the battery will not be affected.

Exemplarily, the ratio of the thickness of the conductive layer to the thickness of the active material layer may be 1:20, 1:25, 1:30, 1:35, 1:40, etc.

Exemplarily, the thickness of the conductive layer is 1µm~5µm, preferably 1µm~1.5µm.

Exemplarily, the thickness of the active material layer is 40µm~120µm, preferably 60µm~100µm.

In some embodiments, the conductive layer further includes a conductive agent and a binder, and a mass ratio of the MXene material, the conductive agent and the binder is (0.5~3):(32~37):(58~66).

Specifically, the conductive agent is provided to further enhance the conductive performance of the conductive layer and current collector. The binder is provided on one hand to elevate the adhesion between various ingredients of the conductive layer, and on another hand may also elevate the adhesion between the conductive layer and the active material layer.

The mass ratio of the MXene material, the conductive agent and the binder is (0.5~3):(32~37):(58~66), so that the mass content of each ingredient in the conductive layer is appropriate, which may both strengthen the adhesion between the current collector and the active material layer, and elevate the conductive performance of the current collector without producing adverse effects on other electrical performance of the battery.

When the mass proportion of the MXene material in the conductive layer is too little, the MXene material cannot act to effectively strengthen the adhesion between the current collector and the active material layer. When the mass proportion of the MXene material in the conductive layer is too much, although the MXene material may act to effectively strengthen the adhesion between the current collector and the active material layer, it is verified by experiment that excessive MXene material will significantly deteriorate the DC internal resistance of the battery, and bring adverse effects to the battery.

When the mass proportion of the binder in the conductive layer is too little, it is difficult effectively elevate the adhesion between various ingredients of the conductive layer. When the mass proportion of the binder is too much, it is verified by experiment that excessive binder cannot further improve the adhesion between various ingredients of the conductive layer, and cause a waste of the binder instead. Also, the mass percentage content of the MXene material will be less, which affects the conductive performance of the battery.

Further, the mass ratio of the MXene material, the conductive agent and the binder is (2~3):(32~37):(58~66), so that the mass content of each ingredient in the conductive layer is more appropriate, which may both significantly strengthen the adhesion between the current collector and the active material layer, and obviously elevate the conductive performance of the current collector.

Exemplarily, the mass ratio of the MXene material, the conductive agent and the binder may be 0.5:32:58, 0.5:37:66, 1:33:60, 1.5:35:62, 2:37:64, 2.5:35:66, 3:34:59, etc.

In some embodiments, the MXene material includes: transition metal carbide and/or transition metal nitride.

The transition metal carbide includes: one or more of Ti₃C₂Tₓ, Ti₂CTₓ, Nb₂CTₓ, Nb₄C₃Tₓ, Ta₄C₃Tₓ, V₄C₃Tₓ, V₂CTₓ, Mo₂CTₓ, TiVCTₓ, TiNbCTₓ, TiTaCTₓ, VNbCTₓ, Ti₂VC₂Tₓ, Ti₂TaC₂Tₓ, Mo₂TiC₂Tₓ, Ti₃CNTₓ, and Mo₂Ti₂C₃Tₓ.

The transition metal nitride includes: one or more of Ti₂NTₓ, V₂NTₓ, W₂NTₓ, and Ti₄N₃Tₓ.

Specifically, the MXene material may include the transition metal carbide only, may also include the transition metal nitride only, and may also include the transition metal carbide and the transition metal nitride simultaneously.

The transition metal carbide may include one carbide only, and may also be a mixture of two or multiple carbides. Exemplarily, the transition metal carbide may be Ti₃C₂ only, may also be a mixture of Ti₃AlC₂ and Ti₂C, and may also be a mixture of Ti₂AlC, Nb₂C, Nb₂AlC and Nb₄C₃, which is not specifically limited here.

The transition metal nitride may be Ti₂AlN only, may also be Ti₄AlN₃ only, and may also be a mixture of Ti₂AlN and Ti₄AlN₃.

In some embodiments, the active material layer includes the active material, the conductive agent and the binder, and a mass ratio of the active material, the conductive agent and the binder is (97~99):(0.5~1):(0.4~2).

Specifically, compared with the existing active material layer, the proportion of the active material in the active material layer of the present disclosure increases, while the proportion of the binder decreases. This is because the addition of the MXene material enhances the adhesion between the current collector and the active material layer, and under the condition that a specific peel strength of the electrode sheet is ensured, the content of the binder in the active material layer may be reduced, and the content of the active material in the active material layer may be increased. In this way, with the same coating surface density, the capacity of the battery is enhanced, and the stability of long-term use of the battery is ensured.

However, through experimental verification, if the mass proportion of binder is too little, the peel force of the positive electrode will be decreased significantly.

Exemplarily, the mass ratio of the active material, the conductive agent and the binder may be 99:0.5:0.4, 97:0.9:2, 98:0.7:1, 98.5:0.7:1.5, and 97.5:0.5:2.

In some embodiments, the conductive agent is at least one of conductive carbon black, conductive graphite, a carbon nanotube, a nano carbon fiber and graphene.

Specifically, the conductive agent may be one of the conductive carbon black, the conductive graphite, the carbon nanotube, the nano carbon fiber and the graphene, and may also be a mixture of two or more of the above.

The conductive agent in the conductive layer and the conductive agent in the active material layer may be the same or different, which is not limited herein.

In some embodiments, the binder is at least one of polyacrylic acid, polyvinylidene fluoride, polyvinyl alcohol and sodium carboxymethyl cellulose.

Specifically, various ions in the binder, such as acid radical ions in polyacrylic acid, fluorine ions in polyvinylidene fluoride, hydroxyl groups in polyvinyl alcohol and carboxyl groups in sodium carboxymethyl cellulose, may be combined with functional groups (such as hydroxyl groups, halogen groups, etc.) on a surface of the MXene material by means of hydrogen bonding, thereby acting as a connecting bridge, further strengthening the adhesion between the conductive layer and the positive active material layer, enhancing the peel force of the positive electrode, and improving the long-term cycle stability of the battery.

The present disclosure further provides a method for preparing a positive electrode, including:

Step S100. Preparing a conductive layer slurry, wherein the conductive layer slurry including an MXene material;

Step S200. Coating the conductive layer slurry on a current collector to obtain an intermediate electrode sheet, wherein the intermediate electrode sheet includes the current collector and the conductive layer coated on the current collector;

Step S300. Preparing an active material layer slurry, coating the active material layer slurry on the conductive layer to obtain the positive electrode.

Specifically, the conductive layer slurry includes an MXene material, a conductive agent, a binder, a dispersant and a solvent, wherein a mass ratio of the MXene material, the conductive agent, the binder and the dispersant is 0.5~3:32~37:58~66:0.2~1.

The active material layer slurry includes an active material, the conductive agent, the binder, the dispersant and the solvent, wherein a mass ratio of the active material, the conductive agent, the binder and the dispersant is 97~99:0.5~1:0.4~2:0.05~0.1.

The dispersant is at least one of polyvinylpyrrolidone, polyethylene glycol, a styrene maleic anhydride copolymer, and an acrylic oligomer. The dispersant is provided to enhance a dispersion performance between various ingredients of the conductive layer, so that various ingredients may be uniformly mixed.

The dispersant in the conductive layer slurry may be deionized water, and the solvent in the active material layer slurry may be N-methylpyrrolidone.

When preparing the positive electrode, firstly, the MXene material, the conductive agent, the binder and the deionized water used as the dispersant are mixed uniformly according to a predetermined mass ratio to obtain the conductive layer slurry.

Secondly, the conductive layer slurry is coated on the current collector and subjected to baking, electrophoresis, winding and other processes to obtain the intermediate electrode sheet. The current collector may be made of aluminum, titanium or other metal alloy materials, and a thickness of the current collector may be 10µm~25µm.

Then, the active material, the conductive agent, the binder and the dispersant are mixed uniformly according to a predetermined mass ratio to prepare a positive electrode active slurry, then the positive electrode active slurry is coated on the conductive layer and then subjected to baking, rolling and other processes to obtain the positive electrode.

The active material may be one or more of lithium iron phosphate, ternary lithium, and lithium manganese iron.

A solid content of the positive electrode slurry may be selected as 63%±5%, and adjusted according to the difference of the selected active material.

In the positive electrode obtained by this preparation method, because the MXene material is added in the conductive layer, the conductive performance and stability of the battery may be enhanced, and the adhesion between the current collector and the active material layer may also be strengthened. In this way, the peel force of the positive electrode may be enhanced, and the long-term cycle stability of the battery may be improved.

The present disclosure further provides a battery, which includes the positive electrode described in any one of the embodiments in the first aspect or the positive electrode obtained by the preparation method in the second aspect, as well as a separator and a negative electrode.

Specifically, the positive electrode, the separator and the negative electrode may be assembled by means of winding or stacking.

The separator may be a polypropylene separator, a polyethylene separator and a modified composite separator thereof.

The battery also includes the electrolyte. The electrolyte includes one or more of propylene carbonate, ethylene carbonate, dimethyl carbonate, diethyl carbonate, and ethyl methyl carbonate.

The battery has the technical effects described in any of the above embodiments, which will not be described redundantly here.

The following further discusses the present disclosure through specific embodiments and comparative examples.

### Example 1:

A positive electrode includes a current collector, an active material layer and a conductive layer disposed between the current collector and the active material layer. The conductive layer includes Ti₃C₂Tₓ, conductive carbon black and polyacrylic acid with a mass ratio of 0.5:35.5:64. The current collector is an aluminum foil. The active material layer includes lithium iron phosphate, the conductive carbon black, polyvinylidene fluoride (PVDF) with a mass ratio of 97.6:0.8:1.6.

A method for preparing the positive electrode includes the following:

The Ti₃C₂Tₓ, the conductive carbon black, the polyacrylic acid and the deionized water with the mass ratio of 0.5:35:64:0.5 are prepared into a conductive layer slurry through stirring dispersion, grinding and other process flows. A solid content in the slurry is 45%±3%, and a viscosity is ≥150mPa.s.

The conductive layer slurry is transferred to a slurry tank for gravure coating, and coated on an aluminum foil with a thickness of 13µm to obtain an intermediate electrode sheet (hereinafter referred to as carbon-coated aluminum foil), wherein a coating thickness of the conductive layer slurry is 1µm.

Lithium iron phosphate, the conductive carbon black and polyvinylidene fluoride are dry mixed with a mass ratio of 97.5:0.8:1.6 for 20 to 30 minutes to make them disperse uniformly, then N-methylpyrrolidone (NMP) is added and mixed and stirred for 30 to 60 minutes. Thereafter, the dispersant is added and stirred for 150 to 240 minutes until the slurry is dispersed uniformly. The amount of NMP is adjusted to control slurry viscosity, so that the final viscosity of the obtained active material layer slurry is maintained at 5000mPa.s to 10000mPa.s, and the solid content of the slurry is 65%±5%.

The obtained active material layer slurry is coated on the conductive layer of the above intermediate electrode sheet, with a coating surface density of 302.4mg/1540.25mm² and a design capacity of 100Ah, then subjected to baking, rolling and other methods to obtain the positive electrode. A thickness of the positive electrode active material layer after rolling is 80µm.

A method for assembling a lithium-ion battery is as follows:

The above positive electrode is assembled into a lithium-ion battery. The negative electrode is matched with the graphite, the separator is the polypropylene separator, the electrolyte is carbonate electrolyte, and a lithium salt is LiPF₆. The above raw materials are prepared into the lithium-ion battery through winding, hot pressing, assembly, formation and other processes.

At a rated capacity of 100Ah, a performance test is conducted on the lithium-ion battery.

### Example 2

The difference between Example 2 and Example 1 lies in that: the conductive layer includes the Ti₃C₂Tₓ, the conductive carbon black and the polyacrylic acid with the mass ratio of 1:35.5:64.

### Example 3

The difference between Example 3 and Example 1 lies in that: the conductive layer includes the Ti₃C₂Tₓ, the conductive carbon black and the polyacrylic acid with the mass ratio of 2:35.5:64.

### Example 4

The difference between Example 4 and Example 1 lies in that: the conductive layer includes the Ti₃C₂Tₓ, the conductive carbon black and the polyacrylic acid with the mass ratio of 3:35.5:64.

### Example 5

The difference between Example 5 and Example 1 lies in that: a coating thickness of the conductive layer is 2µm.

### Example 6

The difference between Example 6 and Example 1 lies in that: the coating thickness of the conductive layer is 0.67µm.

### Example 7

The difference between Example 7 and Example 1 lies in that: the active material layer includes the lithium iron phosphate, the conductive carbon black, and the polyvinylidene fluoride with the mass ratio of 97.6:0.8:1.2.

### Example 8

The difference between Example 8 and Example 1 lies in that: the active material layer includes the lithium iron phosphate, the conductive carbon black, and the polyvinylidene fluoride with the mass ratio of 97.6:0.8:1.0.

### Example 9

The difference between Example 9 and Example 1 lies in that: the active material layer includes the lithium iron phosphate, the conductive carbon black, and the polyvinylidene fluoride with the mass ratio of 97.6:0.8:0.8.

### Example 10

The difference between Example 10 and Example 1 lies in that: the active material layer includes the lithium iron phosphate, the conductive carbon black, and the polyvinylidene fluoride with the mass ratio of 97.6:0.8:2.0.

### Example 11

The difference between Example 11 and Example 1 lies in that: the active material layer includes the lithium iron phosphate, the conductive carbon black, and the polyvinylidene fluoride with the mass ratio of 97.6:0.8:0.4.

### Example 12

The difference between Example 12 and Example 1 lies in that: the MXene material is Ti₂NTₓ.

### Example 13

The difference between Example 13 and Example 1 lies in that: the MXene material is a mixture of Ti₃C₃Tₓ and Ta₄C₃Tₓ.

### Comparative Example 1

The difference between Comparative Example 1 and Example 1 lies in that: the conductive layer includes the Ti₃C₂Tₓ, the conductive carbon black and the polyacrylic acid with the mass ratio of 0.3:35.5:64.

### Comparative Example 2

The difference between Comparative Example 2 and Example 1 lies in that: the conductive layer includes the Ti₃C₂Tₓ, the conductive carbon black and the polyacrylic acid with the mass ratio of 4:35.5:64.

### Comparative Example 3

The difference between Comparative Example 3 and Example 1 lies in that: the conductive layer does not include the Ti₃C₂Tₓ.

### Comparative Example 4

The difference between Comparative Example 4 and Example 1 lies in that: the positive electrode does not include the conductive layer.

### Comparative Example 5

The difference between Comparative Example 5 and Example 1 lies in that: the coating thickness of the conductive layer is 0.6µm.

### Comparative Example 6

The difference between Comparative Example 6 and Example 1 lies in that: the coating thickness of the conductive layer is 2.3µm.

### Comparative Example 7

The difference between Comparative Example 7 and Example 1 lies in that: the active material layer includes the lithium iron phosphate, the conductive carbon black, and the polyvinylidene fluoride in the mass ratio of 97.6:0.8:0.3.

### Comparative Example 8

The difference between Comparative Example 8 and Example 1 lies in that: the active material layer includes the lithium iron phosphate, the conductive carbon black, and the polyvinylidene fluoride in the mass ratio of 97.6:0.8:2.1.

### Comparative Example 9

The difference between Comparative Example 9 and Example 1 lies in that: the positive electrode does not include the conductive layer, but the active material layer includes the Ti₃C₂Tₓ, the lithium iron phosphate, the conductive carbon black, and the polyvinylidene fluoride in the mass ratio of 0.5:97.1:0.8:1.6.

The following performance tests are conducted on the positive electrodes or batteries obtained from each example and comparative example.
(1) In order to verify whether the various performances of a carbon-coated aluminum foil coated with the conductive layer meet the requirements, an adhesion test is conducted on the carbon-coated aluminum foil.

Adhesion test: A sample strip with a width of 20mm and a length of 120mm is taken. The sample strip is backed at 100°C for 10 minutes, then a 3M tape is attached to the sample strip, which is rolled with a roller five times, and then the tape is peeled off. The test result shall be deemed pass if no carbon coating is carried away on the tape; otherwise, the test result shall be deemed fail.
(2) In order to verify the improvement brought by the carbon-coated aluminum foil on adhesion, a peel force test is conducted on the positive electrode.

A double-sided tape with a length of about 12cm is taken and one side thereof is stuck on a stainless steel plate along a marking line. The prepared sample is stuck on the other side of the double-sided tape according to the marking sequence and rolled by the roller once along a direction of the electrode sheet. The sample under test is placed on a measurement platform and fixed with screws, and the test begins. Relatively stable data are retrieved to display an average value. Peel strength = selected average value (mN)/sample width (mm). The test is conducted for 10 times to retrieve the average value.
(3) To evaluate the influence of carbon-coated aluminum foil on the electrical conductive ability of electrode sheets, a sheet resistance test is conducted.

The electrode sheet is cut into circular pieces of 1540.25mm² using a cutting press, and placed in the middle of a sheet resistance tester to test the sheet resistance of the electrode sheet. The test results are read by the tester. The test is conducted for 10 times to retrieve the average value.
(4) In order to verify the improvement brought by the MXene-added carbon-coated aluminum foil on the performance of the battery, the capacity and direct current resistance (DCR) of different groups of batteries are measured.

Capacity test: I. discharged to 2.0V at 0.5C (50A) constant current; II. charged to 3.65V at 0.5C (50A) constant current and to 0.05C (5A) at a constant voltage; III. discharged to 2.0V at 0.5C (50A) constant current, this discharge capacity is recorded. 25 battery cells are tested for each group respectively to calculate the average value.

DCR test process: The battery is placed in a 25°C constant temperature chamber for 1 hour, charged to 3.65V at 1C rate constant current, then charged at a constant voltage until the current is less than or equal to 0.05C. Under the circumstances, the state of charge (SOC) of the battery is 100%. The battery is held static for 30 minutes, then discharged at 1C rate constant current for 30 minutes. The state of charge (SOC) of the battery is adjusted to 50%. The 50% SOC battery A is kept static for 30 minutes, discharged at 0.2C rate constant current for 30 seconds, then discharged at 1C rate constant current for 5 seconds. The voltage U1 at the last 1 second of discharging at the 0.2C rate constant current at the end of standing, the voltage U2 at the last 1 second of discharging at the 1C rate constant current, the current I1 after discharging at the 0.2C rate constant current, and the current I2 after discharging at the 1C rate constant current are recorded. The DCR of the battery after discharging at 25°C, 50% SOC, 1C rate constant current for 30s is DCR = (U2-U1)/(I2-I1).

The test results are shown in Table 1.

**Table 1 List of Experimental Parameters**

| Group | MXene material | Addition amount of MXene material in the conductive layer | Addition amount of binder in active material layer | Thickness ratio of conductive layer to active material layer |
|---|---|---|---|---|
| Example 1 | Ti₃C₂Tₓ | 0.5 parts | 1.6 parts | 1:80 |
| Example 2 | Ti₃C₂Tₓ | **1 part** | 1.6 parts | 1:80 |
| Example 3 | Ti₃C₂Tₓ | **2 parts** | 1.6 parts | 1:80 |
| Example 4 | Ti₃C₂Tₓ | **3 parts** | 1.6 parts | 1:80 |
| Example 5 | Ti₃C₂Tₓ | 0.5 parts | 1.6 parts | **1:40** |
| Example 6 | Ti₃C₂Tₓ | 0.5 parts | 1.6 parts | **1:119** |
| Example 7 | Ti₃C₂Tₓ | 0.5 parts | **1.2 parts** | 1:80 |
| Example 8 | Ti₃C₂Tₓ | 0.5 parts | **1.0 parts** | 1:80 |
| Example 9 | Ti₃C₂Tₓ | 0.5 parts | **0.8 parts** | 1:80 |
| Example 10 | Ti₃C₂Tₓ | 0.5 parts | **2.0 parts** | 1:80 |
| Example 11 | Ti₃C₂Tₓ | 0.5 parts | **0.4 parts** | 1:80 |
| Example 12 | **Ti₂NTₓ** | 0.5 parts | 1.6 parts | 1:80 |
| Example 13 | **Ti₃C₂Tₓ and Ta₄C₃Tₓ** | 0.5 parts | 1.6 parts | 1:80 |
| Comparative Example 1 | Ti₃C₂Tₓ | **0.3 parts** | 1.6 parts | 1:80 |
| Comparative Example 2 | Ti₃C₂Tₓ | **4 parts** | 1.6 parts | 1:80 |
| Comparative Example 3 | - | - | 1.6 parts | 1:80 |
| Comparative Example 4 | - | - | 1.6 parts | - |
| Comparative Example 5 | Ti₃C₂Tₓ | 0.5 parts | 1.6 parts | **1:133** |
| Comparative Example 6 | Ti₃C₂Tₓ | 0.5 parts | 1.6 parts | **1:35** |
| Comparative Example 7 | Ti₃C₂Tₓ | 0.5 parts | **0.3 parts** | 1:80 |
| Comparative Example 8 | Ti₃C₂Tₓ | 0.5 parts | **2.1 parts** | 1:80 |
| Comparative Example 9 | - | - | 1.6 parts | - |

**Table 2 List of Test Results**

| Sample | Adhesion of carbon-coated aluminum foil | Sheet resistance (Ω) | Peel force (N/m) | DCR(mΩ) | Capacity (Ah) |
|---|---|---|---|---|---|
| Example 1 | Pass | 0.44 | 20.5 | 0.41 | 101.2 |
| Example 2 | Pass | 0.45 | 22.4 | 0.42 | 101.6 |
| Example 3 | Pass | 0.46 | 32.1 | 0.42 | 101.5 |
| Example 4 | Pass | 0.55 | 33.5 | 0.47 | 101.3 |
| Example 5 | Pass | 0.41 | 33.8 | 0.4 | 101.5 |
| Example 6 | Pass | 0.50 | 13.7 | 0.44 | 101.1 |
| Example 7 | Pass | 0.45 | 19.5 | 0.43 | 101.9 |
| Example 8 | Pass | 0.47 | 16.8 | 0.40 | 102.2 |
| Example 9 | Pass | 0.47 | 15.3 | 0.41 | 101.5 |
| Example 10 | Pass | 0.42 | 37.9 | 0.43 | 101.0 |
| Example 11 | Pass | 0.48 | 13.4 | 0.44 | 101.8 |
| Example 12 | Pass | 0.45 | 19.5 | 0.42 | 101.5 |
| Example 13 | Pass | 0.44 | 20.1 | 0.43 | 101.7 |
| Comparative Example 1 | Pass | 0.46 | 12.2 | 0.40 | 101.5 |
| Comparative Example 2 | Pass | 0.56 | 36.0 | 0.52 | 101.2 |
| Comparative Example 3 | Pass | 0.44 | 12.0 | 0.43 | 101.3 |
| Comparative Example 4 | Fail | 0.55 | 8.8 | 0.67 | 100.5 |
| Comparative Example 5 | Fail | 0.51 | 9.5 | 0.47 | 101.2 |
| Comparative Example 6 | Pass | 0.43 | 19.7 | 0.42 | 100.8 |
| Comparative Example 7 | Pass | 0.44 | 4.6 | 0.43 | 103.2 |
| Comparative Example 8 | Pass | 0.42 | 33.2 | 0.43 | 98.5 |
| Comparative Example 9 | Fail | 0.66 | 5.8 | 0.71 | 100.0 |

Referring to Table 1 and Table 2, compared to Comparative Example 3, in Examples 1 to Example 13, due to the addition of the MXene material in the conductive layer, the adhesion between the current collector and the active material layer is significantly strengthened, thereby significantly enhancing the peel force of the positive electrode. Meanwhile, the addition of the MXene material does not cause deterioration to the performance of the carbon-coated aluminum foil, the electrode sheet, and the lithium-ion battery.

Comparing the relevant data of Example 1 to Example 4, it can be obtained that in the conditions where other parameters are fixed, the more the MXene material is added, the more obvious the improvement on the peel force of the electrode sheet.

Comparing the relevant data of Example 1, Example 5 and Example 6, it can be obtained that with the same thickness of the active material layer and the same proportion of the conductive layer, the thicker the coating thickness of the conductive layer, the more obvious the improvement on the peel force of the electrode sheet.

Comparing the relevant data of Example 1, Example 7 to Example 11, it can be obtained that in the conditions where other parameters are fixed, the more polyvinylidene fluoroethylene is added in the active material layer, the more obvious the improvement on the peel force of the electrode sheet. However, under the condition where the total mass is fixed, more addition of polyvinylidene fluoroethylene may cause the mass proportion of the active material to decrease, which affects the capacity of the battery.

In Comparative Example 1, due to too little addition of the MXene material in the conductive layer, it is difficult to effectively improve the peel force of the electrode sheet, resulting in the low peel force of the electrode sheet.

In Comparative Example 2, due to too much addition of the MXene material in the conductive layer, although the peel force of the electrode sheet may be significantly improved, DCR is dramatically deteriorated, which brings adverse effects to the lithium-ion battery.

In Comparative Example 3, because the conductive layer does not include the Ti₃C₂Tₓ, it is difficult to improve the peel force of the electrode sheet through the MXene material, resulting in the low peel force of the electrode sheet.

In Comparative Example 4, because the positive electrode does not include the conductive layer, it is difficult to improve the electrical performance of the positive electrode through the conductive layer, resulting in very high DCR and low battery capacity. In addition, the adhesion of the carbon-coated aluminum foil of the positive electrode also fails the test, and the peel force of the electrode sheet is very low.

In Comparative Example 5, because the coating thickness of the conductive layer is too thin, it is difficult to effectively improve the peel force of the electrode sheet, resulting in the low peel force of the electrode sheet.

In Comparative Example 6, because the coating thickness of the conductive layer is too thick, although it may be possible to effectively strengthen the adhesion between the current collector and the active material layer and improve the peel force of the electrode sheet, the excessively thick coating thickness may cause adverse effects on the electrical performance of the battery, resulting in reduced capacity of the battery.

In Comparative Example 7, due to too little addition of polyvinylidene fluoride, the peel force of the electrode sheet significantly decreases, which is unfavorable for practical use.

In Comparative Example 8, due to too much addition of polyvinylidene fluoride, although it may be possible to significantly improve the peel force of the electrode sheet, under the condition where the total mass is fixed, too much addition of polyvinylidene fluoride may cause the mass proportion of the active material to be too low, which significantly reduces the capacity of the battery.

In Comparative Example 9, the positive electrode does not include the conductive layer, but the Ti₃C₂Tₓ is added to the active material layer. The experimental data shows that adding the MXene material to the active material cannot improve the peel force of the electrode sheet. Moreover, because the conductive layer is not included, it is difficult to improve the electrical performance of the positive electrode through the conductive layer, resulting in very high DCR, very high separator resistance, and low battery capacity.

To sum up, in the present disclosure, by adding the MXene material to the conductive layer, on one hand, due to the excellent electrical conductive performance of the MXene material, the addition of the MXene material may act as a conductive agent to improve a DC internal resistance of the lithium-ion battery, reduce heat generated by the battery in practical application, and further elevate the electrical conductive performance and stability of the battery.

On the other hand, because the MXene material contains abundant functional groups such as hydroxyl groups and halogen groups as well as transition metals, the functional groups may be combined with various ions (such as fluorine ions, acid radical ions, hydroxyl groups, carboxyl groups, etc.) in the active material layer by means of hydrogen bonding, acting as a connecting bridge, thereby strengthening the adhesion between the current collector and the active material layer, further enhancing the peel force of the positive electrode, and improving the long-term cycle stability of the battery.

Additionally, since the addition of the MXene material enhances the adhesion between the current collector and the active material layer, under the condition of ensuring a specific peel strength of the electrode sheet, the content of the binder in the active material layer may be reduced, and a mass proportion of the active material in the active material layer may be increased. In this way, under the condition of the same coating surface density, the capacity of the battery is enhanced, and the stability of long-term use of the battery is ensured.

A person of ordinary skill in the art should understand: the discussion of any of the above embodiments is merely exemplary and is not intended to imply that the scope of the present disclosure (including claims) is limited to these embodiments. Under the concept of the present disclosure, technical features in the above embodiments or different embodiments may also be combined, steps may be implemented in any order, and there exist many other variations of different aspects of the embodiments of the present disclosure as above, which are not provided in details for brevity.

## Claims

1. A positive electrode, comprising a current collector, an active material layer and a conductive layer disposed between the current collector and the active material layer, wherein the conductive layer comprises an MXene material.

2. The positive electrode according to claim 1, wherein a ratio of a thickness of the conductive layer to a thickness of the active material layer is 1:(40~120).

3. The positive electrode according to claim 1, wherein the conductive layer further comprises a conductive agent and a binder, a mass ratio of the MXene material, the conductive agent and the binder is (0.5~3):(32~37):(58~66).

4. The positive electrode according to claim 1, wherein the MXene material comprises a transition metal carbide and/or a transition metal nitride;
the transition metal carbide comprises: one or more of Ti₃C₂Tₓ, Ti₂CTₓ, Nb₂CTₓ, Nb₄C₃Tₓ, Ta₄C₃Tₓ, V₄C₃Tₓ, V₂CTₓ, Mo₂CTₓ, TiVCTₓ, TiNbCTₓ, TiTaCTₓ, VNbCTₓ, Ti₂VC₂Tₓ, Ti₂TaC₂Tₓ, Mo₂TiC₂Tₓ, Ti₃CNTₓ, and Mo₂Ti₂C₃Tₓ;
the transition metal nitride comprises: one or more of Ti₂NTₓ, V₂NTₓ, W₂NTₓ, and Ti₄N₃Tₓ.

5. The positive electrode according to claim 1, wherein the active material layer comprises an active material, a conductive agent and a binder, a mass ratio of the active material, the conductive agent and the binder is (97~99):(0.5~1):(0.4~2).

6. The positive electrode according to any one fo claims 1 to 5, wherein the conductive agent is at least one of conductive carbon black, conductive graphite, a carbon nanotube, a nano carbon fiber and graphene.

7. The positive electrode according to any one fo claims 1 to 5, wherein the binder is at least one of polyacrylic acid, polyvinylidene fluoride, polyvinyl alcohol, a styrene butadiene copolymer and sodium carboxymethyl cellulose.

8. A method for preparing a positive electrode, comprising:
preparing a conductive layer slurry, wherein the conductive layer slurry comprises an MXene material;
coating the conductive layer slurry on a current collector to obtain an intermediate electrode sheet, wherein the intermediate electrode sheet comprises the current collector and a conductive layer coated on the current collector;
preparing an active material layer slurry, coating the active material layer slurry on the conductive layer to obtain the positive electrode.

9. The method for preparing the positive electrode according to claim 8, wherein the conductive layer slurry comprises the MXene material, a conductive agent, a binder, a dispersant and a solvent, wherein a mass ratio of the MXene material, the conductive agent, the binder and the dispersant is 0.5~3:32~37:58~66:0.2~1;
the active material layer slurry comprises an active material, the conductive agent, the binder, the dispersant and the solvent, wherein a mass ratio of the active material, the conductive agent, the binder and the dispersant is 97~99:0.5~1:0.4~2:0.05~0.1.

10. A battery, comprising the positive electrode according to any one fo claims 1 to 7, a separator and a negative electrode.

11. A battery, comprising the positive electrode according the positive electrode prepared by the preparation method according to claim 8 or claim 9, a separator and a negative electrode.
